# EUROPÄISCHE PATENTANMELDUNG

(11) **EP 1 602 516 A2**
(43) Veröffentlichungstag der Anmeldung: **07.12.2005**
(21) Anmeldenummer: 05011565.8
(22) Anmeldetag: 30.05.2005
(51) Int. Cl.: B60H 1/34

(54) **Luftdüsen-Anordnung eines Kraftfahrzeugs**

(30) Priorität: 01.06.2004 DE 102004026911
(71) Anmelder: Behr GmbH & Co. KG, 70469 Stuttgart (DE)
(72) Erfinder: Baruschke, Wilhelm, Dipl.-Ing., 73117 Wangen (DE); Lochmahr, Karl, Dipl.-Ing. (FH), 71665 Vaihingen/Enz (DE); Mayer, Michael, Dipl.-Ing., 75038 Oderderdingen (DE); Pitz, Eric, 70199 Stuttgart (DE)

(57) **Zusammenfassung**

Die Erfindung betrifft eine Luftdüsen-Anordung, insbesondere Mitteldüsen-Anordnung, eines Kraftfahrzeugs, welche mindestens eine Luftdüse (3) aufweist, welche in der Konsole eines Kraftfahrzeugs angeordnet ist, wobei die Luftdüsen (3) in eine Baugruppe (2) mit der Bedieneinheit (1) der Kraftfahrzeug-Klimasteuerung integriert sind, sowie ein Verfahren zur Regelung einer derartigen Luftdüsen-Anordnung.

## Beschreibung

Die Erfindung betrifft eine Luftdüsen-Anordnung, insbesondere eine Mitteldüsen-Anordnung, eines Kraftfahrzeugs gemäß dem Oberbegriff des Anspruches 1.

Bekannt sind von Hand einstellbare Mitteldüsen, durch welche temperierte, von der Klimaanlage eines Kraftfahrzeugs kommende Luft entsprechend der Luftdüseneinstellung dem Fahrzeuginnenraum zugeführt wird. Hierbei sind die Mitteldüsen im Mittelkonsolenbereich der Schalttafel angeordnet, etwas beabstandet von der Bedieneinheit für die Klimaanlage, über welche die Temperatur und die Gebläsestärke von Hand eingestellt und entsprechend der Einstellung automatisch geregelt wird. Die Einstellung der Ausströmrichtung (oben/unten, rechts/links), der Intensität, sowie der Strahlaufweitung (Spot/diffus) erfolgt durch die Insassen von Hand.

Es ist Aufgabe der Erfindung, eine verbesserte Luftdüsen-Anordnung zur Verfügung zu stellen.

Diese Aufgabe wird gelöst durch eine Luftdüsen-Anordnung mit den Merkmalen des Anspruchs 1. Vorteilhafte Ausgestaltungen sind Gegenstand der Unteransprüche.

Erfindungsgemäß ist eine Luftdüsen-Anordung eines Kraftfahrzeugs vorgesehen, welche mindestens eine Luftdüse aufweist, welche in der Konsole eines Kraftfahrzeugs angeordnet ist, wobei die Luftdüsen in eine Baugruppe mit der Bedieneinheit der Kraftfahrzeug-Klimaanlage integriert sind. Dabei handelt es sich insbesondere um die Mitteldüse(n), jedoch ist auch eine entsprechende Ausgestaltung der Seitendüse(n) möglich. Durch die integrierte Ausgestaltung einer Baugruppe mit einer oder mehr, insbesondere zwei, Luftdüsen und der Bedieneinheit können in Folge der vereinfachten Montage, insbesondere der Endmontage, Kosten eingespart werden.

Die Baugruppe weist bevorzugt eine dem Fahrer zugeordnete Mitteldüse und/oder eine dem Beifahrer zugeordnete Mitteldüse und/oder einen Drehregler zur Einstellung des Temperatur-Sollwerts und/oder einen Drehregler zur Einstellung der Gebläseleistung und/oder einen Drehregler zur Einstellung der Luftverteilung und/oder einen Schalter für die Betätigung der Klimaanlage und/oder einen Schalter für den Umluftbetrieb auf, sowie mindestens einen Stellantrieb für die Mitteldüse und ein Klimasteuergerät. So lässt sich eine derartige Baugruppe auf Grund ihrer Funktionsfähigkeit auch in Baugruppenform auf einfache Weise vor dem Einbau prüfen, so dass keine fehlerhaften Baugruppen montiert werden. In Folge eines modularen Aufbaus der Baugruppe kann ferner die Logistik vereinfacht werden, wodurch die Herstellungskosten weiter gesenkt werden können.

Sind die Luftdüsen als Komfort-Luftdüsen ausgestaltet, das heißt mit der Möglichkeit ausgestaltet, sowohl die Ausströmrichtung als auch die Luftstrahlaufweitung (Variation zwischen Spotausströmung und diffuser Ausströmung, ggf. auch vollständig verschließbar) zu verändern, gegebenenfalls auch automatisch, so bietet eine derartige Baugruppe für den Nutzer einen hohen Komfort, insbesondere wenn eine automatische Regelung in Abhängigkeit von Außenparametern, wie Außentemperatur und/oder Sonneneinstrahlung und/oder weiterer Parameter, erfolgt. Vorzugsweise werden solche Komfort-Luftdüsen als Dralldüsen ausgebildet, bei denen die diffuse Ausströmcharakteristik, mittels eines der ausströmenden Luft aufgeprägten Dralls und die Spotcharakteristik mittels einer gerichteten Luftströmung, realisiert wird. Die Aufprägung eines Dralls erfolgt beispielsweise mittels spiralförmig angeordneter Luftführungselemente, wie in der nicht vorveröffentlichten deutschen Patentanmeldung mit dem Aktenzeichen 10 2004 024 064.7 offenbart.

Bevorzugt sind mit der Klimasteuer-/Regelung ein Innentemperaturfühler und/oder ein Außentemperatursensor und/oder ein Kältemittelhochdruck-Sensor und/oder ein Sensor für die Sonneneinstrahlung verbunden, so dass in Abhängigkeit von den äußeren Umgebungsbedingungen eine Regelung der Innentemperatur unter Einbeziehung einer automatischen Luftdüseneinstellung hinsichtlich Ausströmrichtung und/oder Art des Luftstrahls möglich ist, wodurch der Komfort und auf Grund geringerer Ablenkungen des Fahrers durch Einstellungen der Luftdüsen die Fahrsicherheit weiter erhöht werden kann.

Im Folgenden wird die Erfindung anhand eines Ausführungsbeispiels mit Varianten unter Bezugnahme auf die Zeichnung im Einzelnen erläutert. In der Zeichnung zeigen:
- Fig. 1: eine Mitteldüsen-Anordnung gemäß dem Ausführungsbeispiel,
- Fig. 2: eine Darstellung des modularen Aufbaus eines Klimasteuergeräts gemäß einer Variante, und
- Fig. 3: ein Funktionsdiagramm für eine automatische Einstellung der Mitteldüsen in Hinblick auf die Stellungen "Spot" und "diffus".

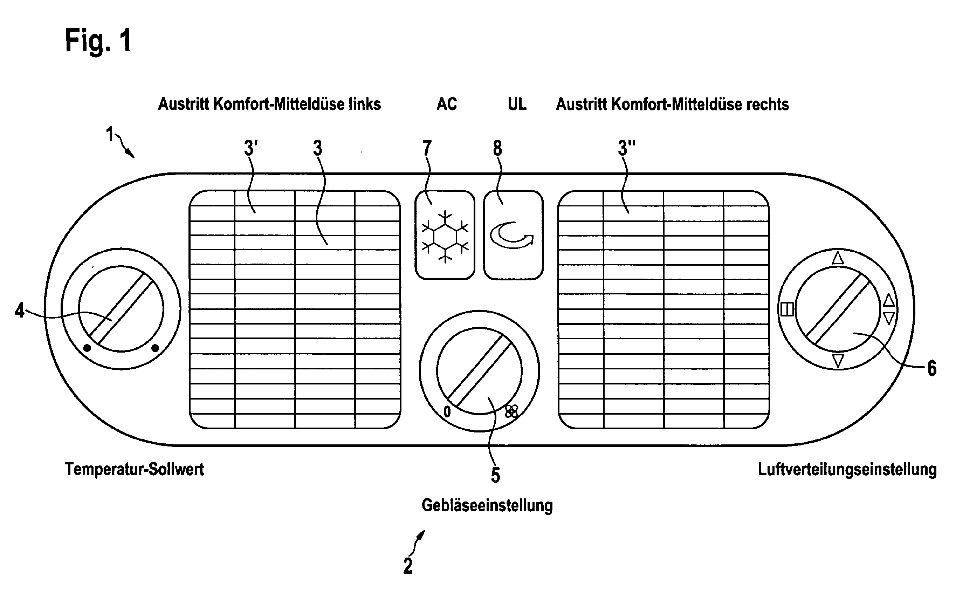

Eine Kraftfahrzeug-Klimaanlage von im Prinzip herkömmlichem Aufbau weist eine in der Mittelkonsole des Kraftfahrzeugs angeordnete Bedieneinheit 1 auf, in welcher die Klimasteuerung zumindest teilweise integriert ist. Die Bedieneinheit 1 ist hierbei Teil einer Baugruppe 2, welche auch zwei Mitteldüsen 3 umfasst, wobei eine Mitteldüse 3' dem Fahrer und eine Mitteldüse 3" dem Beifahrer zugeordnet ist. Die Bedieneinheit 1 umfasst die bekannten Einstellungsmöglichkeiten zur Fahrzeugklimatisierung, vorliegend einen Drehregler 4 zur Einstellung des Temperatur-Sollwerts, einen Drehregler 5 zur Einstellung der Gebläseleistung, einen Drehregler 6 zur Einstellung der Luftverteilung der Klimaanlage, einen Schalter 7 für die Betätigung der Klimatisierung (AC) und einen Schalter 8 für den Umluftbetrieb. Wie aus Fig. 1 ersichtlich, sind die Mitteldüsen 3 in der gleichen Front, nämlich die der Baugruppe 2, wie die Drehregler und Schalter 4 bis 8 integriert. Durch die Ausgestaltung der Baugruppe 2 mit Bedieneinheit 1 und Mitteldüsen 3 ergibt sich unter anderem eine erhebliche Vereinfachung der Endmontage.

In Fig. 1 ist die typische Bedienoberfläche einer so genannten Klimatisierungs-Semiautomatik dargestellt, jedoch ist eine Ausgestaltung mit einer Klimavollautomatik-Bedienoberfläche (Temperaturregelung, automatische Luftverteilung und Luftmengensteuerung) integriert in dem Mitteldüsen-Modul, ebenfalls möglich.

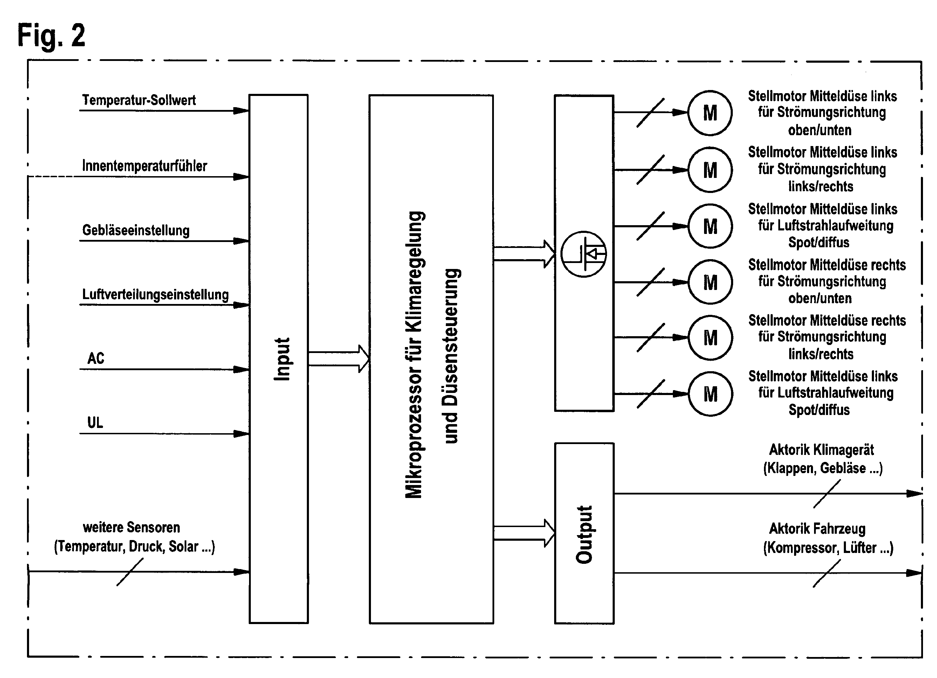

In Fig. 2 sind modular die Funktionsblöcke für die konventionelle Klimaregelung und für die Mitteldüsensteuerung dargestellt.

Die Eingangsgrößen Temperatur-Sollwert (eingestellt über Drehregler 4), Gebläseeinstellung (eingestellt über Drehregler 5), Luftverteilungseinstellung (eingestellt über Drehregler 6), sowie AC-Schalter 7 und Umluft-Schalter 8 als auch die Signale für Innentemperatur, Außentemperatur, Kühlwassertemperatur, Sonneneinstrahlung, Kältemittelhochdruck und weitere Sensorsignale werden der kombinierten Klimaregelung/Mitteldüsensteuerung zugeführt. Dieses Modul wertet die Eingabeparameter aus und gibt als Output einerseits die konventionellen Stellsignale zum Klimagerät (Einstellung von Klappen und Gebläse) und an das Klimatisierungssystem (Kompressor, Lüfter, Wasserpumpe, Wasserventil) aus als auch die Stellsignale an die integrierte Aktorik zur Steuerung der jeweiligen Komfort-Mitteldüse 3, nämlich den Stellmotoren für die Strömungsrichtung oben/unten und/oder den Stellmotoren für die Strömungsrichtung links/rechts und/oder den Stellmotoren für die Luftstrahlaufweitung (Spot/diffus/zu).

Gemäß dem ersten Ausführungsbeispiel ist ein Maximal-Ausstattungsgrad hinsichtlich automatischer Einstellmöglichkeiten der Komfort-Mitteldüsen gegeben. In weiteren Ausführungsvarianten können beispielsweise die Luftdüsen-Einstellmöglichkeiten für die linke und rechte Mitteldüse jeweils zusammengefasst werden, wodurch sich nur noch je ein Stellmotor für die Strömungsrichtungen oben/unten, links/rechts und die Luftstrahlaufweitung (Spot/diffus/zu) ergibt.

Gemäß einer weiteren Variante kann die Integration der Klimasteuerung auch in die Seitendüsen erfolgen, das heißt, dass anstelle der Mitteldüsen die Bedieneinheit den Seitendüsen zugeordnet ist. Hierbei erfolgt die Steuerung der Komfort-Seitendüsen analog zu der der Komfort-Mitteldüsen.

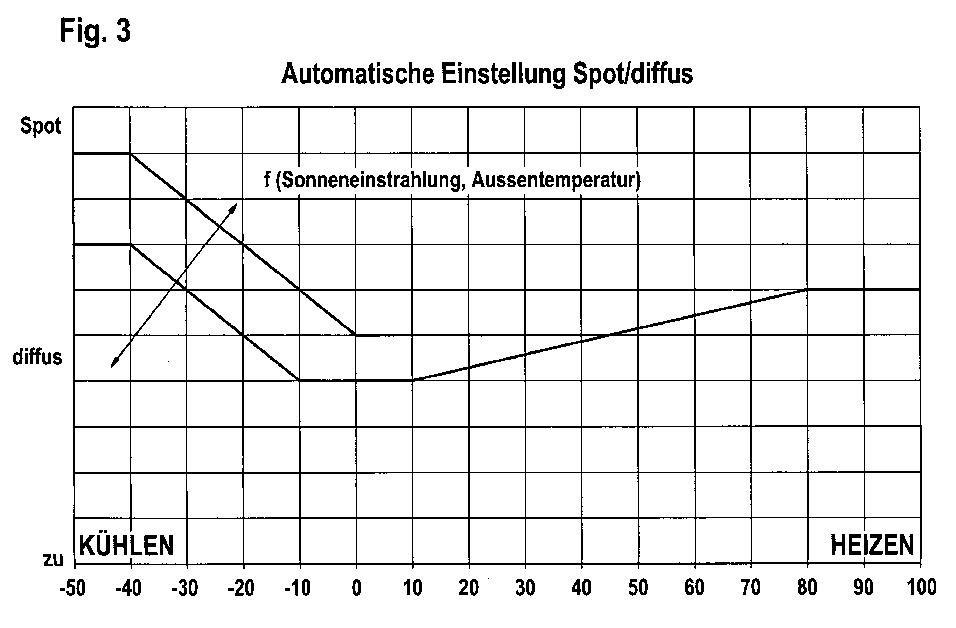

Um dem Fahrer/Beifahrer einen möglichst großen Komfort zu bieten, erfolgt bei entsprechender Voreinstellung in Abhängigkeit der gewählten SollTemperatur, der Sonneneinstrahlung und der Außentemperatur eine automatische Steuerung der Luftstrahlaufweitung Spot/diffus, wie in Fig. 3 beispielhaft dargestellt.

Dabei wird bei hohem Kühlungsbedarf vorzugsweise automatisch die Einstellung "Spot" gewählt, überlagert von den Parametern "Sonneneinstrahlung" und "Außentemperatur".

Mit geringer werdendem Kühlungsbedarf erfolgt ein kontinuierlicher Übergang in eine Diffus-Einstellung (neutraler Bereich), und zunehmendem Heizbedarf wird eine Zwischenstellung "diffus-Spot" bevorzugt. Hierbei ist das Funktionsschaubild von Fig. 3 als beispielhaft anzusehen.

### Bezugszeichenliste

1 Bedieneinheit
2 Baugruppe
3 Mitteldüse
3' dem Fahrer zugeordnete Mitteldüse
3" dem Beifahrer zugeordnete Mitteldüse
4 Drehregler zur Einstellung des Temperatur-Sollwerts
5 Drehregler zur Einstellung der Gebläseleistung,
6 Drehregler zur Einstellung der Luftverteilung
7 Schalter für die Betätigung der Klimaanlage (AC)
8 Schalter für den Umluftbetrieb

## Patentansprüche

1. Luftdüsen-Anordung eines Kraftfahrzeugs, welche mindestens eine Luftdüse (3) aufweist, welche in der Konsole eines Kraftfahrzeugs angeordnet ist, **dadurch gekennzeichnet, dass** die Luftdüsen (3) in eine Baugruppe (2) mit der Bedieneinheit (1) der Kraftfahrzeug-Klimasteuerung integriert sind.

2. Luftdüsen-Anordnung nach Anspruch 1, **dadurch gekennzeichnet, dass** die Baugruppe (2) eine dem Fahrer zugeordnete Luftdüse (3') und/oder eine dem Beifahrer zugeordnete Luftdüse (3") und/oder einen Drehregler zur Einstellung des Temperatur-Sollwerts (4) und/oder einen Drehregler zur Einstellung der Gebläseleistung (5) und/oder einen Drehregler zur Einstellung der Luftverteilung (6) und/oder einen Schalter für die Betätigung der Klimaanlage (7) und/oder einen Schalter für den Umluftbetrieb (8) aufweist.

3. Luftdüsen-Anordnung nach Anspruch 1 oder 2, **dadurch gekennzeichnet, dass** die Baugruppe (2) mindestens einen Stellantrieb für die Luftdüse (3) aufweist.

4. Luftdüsen-Anordnung nach einem der vorhergehenden Ansprüche, **dadurch gekennzeichnet, dass** die Baugruppe (2) ein Klimastauergerät aufweist.

5. Luftdüsen-Anordnung nach Anspruch 4, **dadurch gekennzeichnet, dass** mit dem Klimasteuergerät ein Innentemperaturfühler und/oder ein Außentemperatursensor und/oder ein Drucksensor und/oder ein Sensor für die Sonneneinstrahlung verbunden ist.

6. Luftdüsen-Anordnung nach einem der Ansprüche 4 und 5, **dadurch gekennzeichnet, dass** das Klimasteuergerät eine Regelung zur automatischen Einstellung der Luftdüse (3) in Abhängigkeit der Innentemperatur und/oder der Sonneneinstrahlung und/oder der Außentemperatur und/oder der Soll-Temperatureinstellung aufweist.

7. Luftdüsen-Anordnung nach Anspruch 6, **dadurch gekennzeichnet, dass** die Regelung eine automatische im Wesentlichen stufenlose Einstellung der Luftdüse (3) zwischen Spot-Stellung und Diffus-Stellung umfasst.

8. Luftdüsen-Anordnung nach einem der vorhergehenden Ansprüche, **dadurch gekennzeichnet, dass** die Luftdüse (3) einen elektrischen Stellantrieb für die automatische Richtungseinstellung und/oder die Einstellung Spot-Stellung/Diffus-Stellung aufweist.

9. Luftdüsen-Anordnung nach Anspruch 8, **dadurch gekennzeichnet, dass** die Einstellung Spot-Stellung/Diffus-Stellung im Wesentlichen stufenlos ist.

10. Verfahren zur Regelung einer Luftdüsen-Anordnung nach einem der Ansprüche 1 bis 9, wobei eine automatische elektrisch betätigte Luftdüsen-Einstellung erfolgt.

11. Verfahren zur Regelung einer Luftdüsen-Anordnung nach Anspruch 10, **dadurch gekennzeichnet, dass** die automatische Luftdüsen-Einstellung in Abhängigkeit der Betriebsart (Kühlen-Heizen) und/oder der Sonneneinstrahlung und/oder der Außentemperatur und/oder der Soll-Temperatureinstellung erfolgt.

12. Verfahren zur Regelung einer Luftdüsen-Anordnung nach Anspruch 11, **dadurch gekennzeichnet, dass** die Luftdüsen-Einstellung eine automatische Einstellung der Sput-Stellung/Diffus-Stellung umfasst.
